# EUROPEAN PATENT APPLICATION

(11) **EP 1 347 131 A1**
(43) Date of publication of application: **24.09.2003**
(21) Application number: 02006149.5
(22) Date of filing: 19.03.2002
(51) Int. Cl.: E05B 65/20

(54) **Door handle device**

(71) Applicant: Ford Global Technologies, Inc., Dearborn, Michigan 48126 (US)
(72) Inventor: Dominique, Christer Gustav, 423 53 Torslanda (SE)
(74) Representative: Lindberg, Klas Valter Bo

(57) **Abstract**

The invention relates to a door handle device (1) which is arranged to be moved between at least a first position and a second position. Said handle device (1) comprises an actuator (2), being substantially made of shape memory alloy (SMA), for effecting the movement of said handle device (1) between said at least first and second positions.
The invention also relates to a vehicle (20) and a door system (12) comprising said handle device (1).

Elected for publication: Fig. 1b

## Description

### Field of the Invention

The invention relates to a door handle device which is arranged to be moved between at least a first and a second position.

### Technical Background

Door handles are well known in the art and are used, for example, for vehicle doors. Typically, vehicle door handles are manually movable release handles for e.g. opening and closing a vehicle door. The vehicle door itself typically has inner and outer door handles. The handles are often mechanically connected to a latch mechanism forming part of a vehicle door system. When the latch is in an unlatched state the vehicle door may be opened. The opening can be achieved by gripping and moving the handle to a position where the latch is disengaged and the door may be opened. Since such handle devices often are mechanically connected to the latch mechanism a considerable amount of space is occupied in the vehicle door by such a vehicle door system. Due to various reasons, e.g. safety it is desirable to provide more space in the vehicle door for other applications.

There are also high demands on vehicle door handles and vehicle door systems regarding for example accurate response time, durability, robustness, reliability, break in resistance, and function during extreme loading that still needs to be resolved.

Another issue with today's handle devices and vehicle door systems is that they often comprise many parts, which may result in a complex assembly. There is a risk for such assemblies to result costly. It is thus desirable for many reasons to provide a simple construction for these kinds of handles/systems, which provides for high reliability.

### Summary of the Invention

The object of the present invention is to provide a door handle device that overcomes the above issues and, when installed, occupies a limited amount of space in the door.

Furthermore it is desirable to provide a handle device with high standards regarding durability, robustness, break in resistance, and functionality during extreme loading.

These and other objects are achieved by a handle device according to claim 1. Preferred embodiments of the handle device according to the invention are disclosed in the following dependent claims 2-9.

It is also an object of the present invention to provide a door system that overcomes the above issues and presents high break-in resistance and occupies a limited amount of space in the vehicle. These and other objects are achieved according to claim 10. Preferred embodiments of the door system according to the invention are disclosed in the following dependent claims 11-26.

According to a first aspect of the invention there is provided a door handle device which is arranged to be moved between at least a first position and a second position, wherein said handle device comprises an actuator, substantially made of shape memory alloy (SMA), for effecting the movement of said handle device between said at least first and second positions. An energy source is connectable to the actuator of the handle device.

Preferably, the handle device is a vehicle door handle device. The rugged design with few components makes a handle device according to the invention reliable, robust and also easy to manufacture and install in a vehicle. An actuator made of shape memory alloy has quick response time, which is important in situations e.g. when fast access into a vehicle is of importance. Preferably, a spring unit is arranged together with the actuator in order to control the movement between said first and said second position. It is realized that also other solutions, for controlling the motion of the handle device, can be used together with the actuator comprising shape memory alloy.

According to a preferred embodiment the handle device is an outer door flip handle device. Such a handle device provides a good resistance for burglary attempts. An outer door handle according to the invention is preferably substantially or fully aligned with a surface part of said vehicle door, when the handle device is positioned in said first position. Since the handle is not easily grabbed in said first position an additional obstacle is created for a burglar during a break-in attempt. The more aligned with the outer door skin the outer door handle device is designed the more difficult the handle device in said first position is to force. Such a handle device will also generate low wind resistance during ride, thus enabling less noise and possibly less fuel consumption of a vehicle.

Preferably, said actuator comprises at least one member of shape memory alloy (SMA). A thin cross-section and the simple construction of the shape memory alloy member actuator provides quick response time under normal conditions. The quick response time derives from a possibility of fast heating and cooling of the shape memory alloy member. It is realized that a great surface of a shape memory alloy member provides for especially a fast cooling step.

Accordingly, a further preferred embodiment of said actuator of shape memory alloy (SMA) has at least one back-up member of shape memory alloy (SMA) for providing additional force under extreme conditions. The back-up member has a cross section area that is preferably between 4 and 25 times greater than a shape memory alloy member in the handle device in question. This arrangement provides a reliable and powerful door handle that enables a door to be opened even during extreme loading e.g. if the handle device has been exposed to violence.

According to a second aspect of the invention it is also provided a door system comprising a handle device arranged to be moved between at least a first and a second position, wherein said handle device comprises, an actuator, for effecting the movement of said handle device between said at least first and second positions, and being substantially made of shape memory alloy (SMA). The actuator is connectable to an energy source.

According to a further preferred embodiment of the invention said handle device when being moved in to said second position provides a signal to the door system. This arrangement provides for a door system with electrical or remote connection between the components of the door system. By the possibility to avoid mechanical connections between components of the door system, such as between a door handle and a latch assembly or a key hole etc. more space is made available compared to prior art solutions.

Thus, the door system is preferably arranged in a vehicle door. Preferably, said door system comprises a latch assembly and a control unit for controlling said door system. More preferably, said latch assembly and said control unit are electronically interconnected, without need for mechanical interconnection between components of the door system. This arrangement will provide for a door system, which is easy to install but does not require additional space, for mechanical interconnections, within the door. Hence, more space will be available for safety equipment and other arrangements in e.g. a vehicle door.

Furthermore, the layout of a vehicle door system according to the second aspect of the invention makes it possible to use highly sophisticated solutions for locking and unlocking the vehicle. Suitably, said control unit comprises a locking and unlocking logic for the door system. Preferably, the control unit is provided to be activated by a key or key fob. Conveniently, the key or key fob comprises at least part of the locking and unlocking logic to said door system.

The interconnection between components of said door system can be accomplished by wireless connection. Another way of enabling the interconnection between components of the door system is by cables, through which signals to the components may be transmitted. According to a preferred embodiment of the invention said key or key fob has wireless connection to said control unit for transmitting information to the door system.

It is realized that a door system according to the invention can be controlled at a very detailed level, since it allows for each component to be individually controlled. This will add significant break-in resistance to a vehicle with such a door system. Physical damage to or obstruction of a single component of the vehicle door system will then not have any direct physical impact on other components of the door system, since each component of the door system can be made mechanically isolated from the other and controlled individually. It will not be sufficient to e.g. manipulate a key hole in order to unlock the vehicle. A door system according to the invention is not even necessarily provided with a conventional key hole. Furthermore, the handle device according to the invention is not easily grabbed when in first position. Thus, it will be difficult for an unauthorized person to break-in into a vehicle provided with such a system.

As mentioned above it is realized that the door system can be controlled in a highly sophisticated manner, since the system allows for separate control of individual components of the system. There are a number of possible combinations of individual conditions of door system components for such a system, of which some preferred conditions will be given in the following. These conditions are only indicated by way of example and it is realized that the door system according to the invention enables further ways of controlling a door.

Preferably, said latch assembly is set in a latched condition, and the door being in a closed position is set in a locked or lockable state by said control unit, when said handle device is in said first position.

Another preferred condition of the door system is enabled according to the invention, wherein said latch assembly is set in a latched condition, and the door being in a closed position is set in a locked state by said control unit, when said handle device is in said second position.

In a third condition of the door system according to the invention, said latch assembly is set in an unlatched condition, when said handle device is in said second position, and said door, being set in an unlocked state by said control unit, may be opened.

Alternatively, and in accordance with a preferred fourth condition, said latch assembly is set in an unlatched condition, when said handle device is moved into a third position from said second position, and said door, being set in an unlocked state by said control unit, may be opened. The movement between the second and third position is preferably accomplished by manual operation of the handle device.

Preferably, the control unit will receive a control signal from a component in the system before the next action of the system take place. If the control signal is not received or indicates that something is wrong the vehicle can remain locked or even become locked. This arrangement results in high break-in resistance without demanding a lot of space compared to prior art constructions.

Preferably, a handle device is arranged by each vehicle door of such vehicle. A vehicle provided with the inventive handle device and/or vehicle door system has increased space for necessary safety equipment and also present a robust, reliable and safe opening and closing function to the vehicle door.

The handle device is especially intended for vehicle doors but thanks to its rugged design and limited space keeping it can be suitable for other types of handles as well.

### Brief Description of the Drawings

Currently preferred embodiments of the present invention will now be described in more detail, with reference to the accompanying drawings.
Fig. 1a is a perspective view of a section of a vehicle with a vehicle door handle device, according to a first embodiment of the invention, in a first position.
Fig. 1b is an enlarged cross section of fig. 1a.
Fig. 2a is a perspective view of a section of a vehicle with a vehicle door handle device, according to a first embodiment of the invention, in a second position.
Fig. 2b is an enlarged cross section of fig. 2a.
Fig. 3a is a perspective view of a section of a vehicle with a vehicle door handle device, according to a first embodiment of the invention, in a third position.
Fig. 3b is an enlarged cross section of fig. 3a.
Fig 4 is a perspective view of a section of a vehicle with a vehicle door handle device according to an alternative first embodiment of the invention.
Fig 5a schematically illustrates a vehicle door system according to a second aspect of the invention.
Fig 5b schematically illustrates a vehicle door system according to a further preferred second aspect of the invention.
Fig 6 is a perspective view of an example of a vehicle appropriate for a handle device according to an embodiment of the invention.

### Detailed Description of Preferred Embodiments

A first embodiment of the invention related to a door handle device will now be described by way of example in the following with reference to the accompanying drawings.

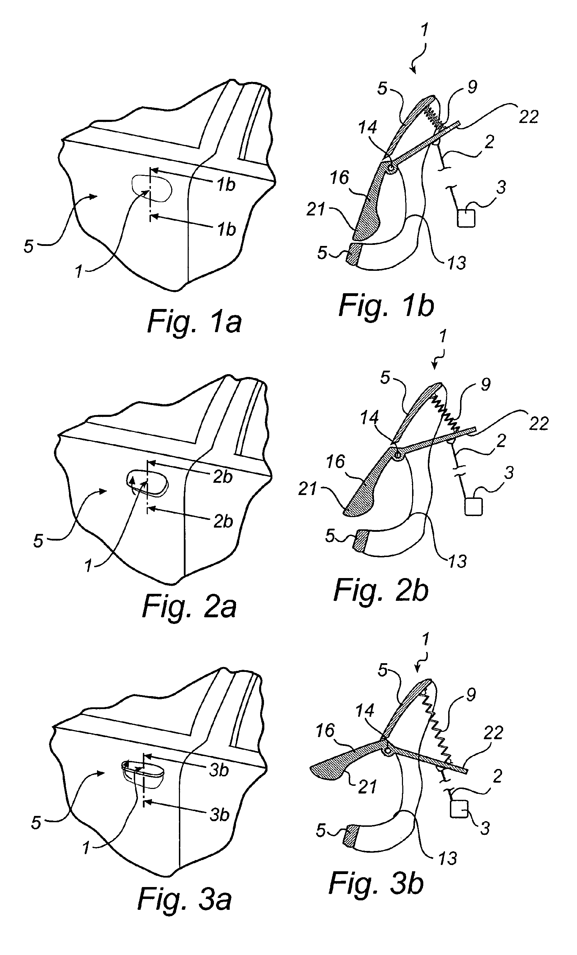

With reference to Figs. 1a and 1b, an outer vehicle door handle device 1, fitted in a vehicle door 5, is disclosed. The door handle 16 is connected to an actuator 2, substantially made of shape memory alloy (SMA) and arranged to by powered by an energy source 3. The door handle 16 is coupled to a return spring 9, which is also attached to the vehicle door 5.

According to the first embodiment of the invention the outer surface of the handle device 1, when in the first position, is substantially aligned with an outer surface part of the vehicle door 5. A lower part 21 of the handle device 1 is fitted in a cavity 13 of the vehicle door 5. An upper part 22 of the door handle 16 is coupled on one side to the actuator 2 and on the other side to the return spring 9. According to a preferred embodiment the door handle 16 of the handle device 1 is a so called flip handle. However, various types of handles, able to perform a motion between at least two positions, can be used.

In accordance with the first embodiment the handle device 1 is mounted pivotal around a shaft 14 to the vehicle door 5. From the second position, which is indicated in figs. 2a and 2b the door handle 16 is preferably pivotal to a third position, when e.g. being grabbed manually by a person about to enter the vehicle. The third position of the handle device 1 is further illustrated in fig. 3a and 3b. The handle device 1 is preferably made of a rigid material.

According to the preferred embodiment a local accumulator is used as the energy source 3. It is understood by a person skilled in the art that a central energy source can be used to provide the handle device 1 with power. It is of course important to create a reliable power system to the handle device 1. Hence, a central and local energy source system working together would be appropriate for this invention. However, the exact manner, in which power is supplied to the handle device 1 is not crucial for the present invention.

The actuator 2 is substantially made of shape memory alloy (SMA). In the preferred embodiment the actuator 2 comprises at least one SMA member. Depending on the forces on the handle device 1 and the SMA member used it is understood that the diameter may be varied. For use in a vehicle door under normal conditions the thickness interval of between 10µm and lmm, preferably between 10µm and 100 µm for the SMA member used as actuator is appropriate. This thickness will give an appropriate response and cycle time, which is essential for this kind of applications. It is hence preferred to use additional SMA members in order to provide more force rather than increase the dimension of an individual SMA member. By the inventive handle device 1, a cycle time of less than 1 second can be accomplished. According to the preferred embodiment the SMA member used is a thin wire with an essentially circular cross section shape. Other shapes of the SMA member cross section are possible.

Vehicles sometimes experience significant violence resulting in extreme loading on at least parts of the vehicle. In order to control the handle device 1 in extreme conditions the handle device 1 has at least one back-up member for providing additional force in extreme conditions.

The back-up member has a cross-sectional area that is preferably between 4 and 25 times greater than a shape memory alloy member in the handle device 1 in question. The back-up member, when activated, will need more power to actuate the handle device 1 but will also add significant force compared to normal operational conditions and hence the extreme control conditions can be fulfilled. The response time of the handle device 1 in extreme control conditions can be longer than in the normal operational conditions.

There are at least two factors making SMA members appropriate for use as actuators. They undergo a phase deformation, changing the crystalline structure of the material, from the Martensite phase to the Austenite phase in a relatively low temperature range. An SMA member can "remember" its previous shape after having been plastically deformed. If a sample, being in its low temperature phase (Martensite), is plastically deformed to a new shape it will return to its original shape when heated to its high temperature phase (Austenite). Since the modulus of elasticity and yield stress are much higher in the Austenite phase it will not only return to its original shape, but when doing so, also produce a force much higher than required for deformation. The difference in deformation force and recovery force can be used for actuation. The original shape is "taught" to the material by forming and fixing it to the desired shape, followed by heating to a temperature much higher than any normal operational temperature. Normally a sufficient heat treatment for shape memory "teaching" is around 500° C and lasts for a few minutes. As mentioned the characteristics of SMA members change dramatically when the temperature is increased. In the materials appropriate for actuation the modulus of elasticity is normally more than doubled and the yield stress more than four times higher, when the material is heated above its transformation temperature. The changes are reversible and fully reproducible. The heating of the SMA member is conveniently done using Ohmic heating, that is by letting current pass through the material, wherein the electric resistance of the material causes a temperature increase.

There are various Shape Memory Alloys suitable for use in an embodiment of the present invention. Nitinol is an example of such a Shape memory alloy. Nitinol is a corrosion resistant, super elastic Nickel-Titanium alloy. Being super elastic, Nitinol can be stretched up to 10% without rupturing. When contracting, it can produce an actuation stress of more than 600 MPa in extreme cases, but should normally not be subjected to more than 170 MPa. Furthermore, when stretched less than 5%, Nitinol is also fatigue persistent. Required electric potential for power supply is normally a few volts. The temperature characteristics for the phase change is highly dependent on the content ratio of the alloy components. There exist in addition to various types of Nitinol also for example Fe-based and Cu-based shape memory alloys. Given the above data it is understood by a man skilled in the art of handle devices that the length of the SMA members is an important design tool in order to provide a long-lasting and reliable handle device.

Now, referring again to fig 1a,b-3a,b the function of the handle device 1 will be described. The pivotally mounted door handle 16 is able to flip out of the vehicle door 5 from the first to the second position. In fig 1b the vehicle door 5 is closed and the handle device 1 is preferably positioned in a non-actuated state in said first position. When the current is applied to the actuator 2, the actuator 2 shrinks due to the rise in temperature in the SMA member. This deformation generates a force resulting in a movement of the handle device 1 towards said second position. The force from the actuator 2 is greater than the force achieved by the opposite return spring 9. The initiated pivotal movement of the handle device 1 is indicated by an arrow in fig. 2a.

Referring now to fig. 3b, wherein a third position of the door handle 16 is illustrated. The motion during opening is indicated with an arrow in fig 3a. The third position can be reached e.g. by a manual operation.

When the current is shut off from the energy source 3 the handle device 1 will resume the first position from the second or third position by the force from the return spring 9. Preferably, a control unit is used for controlling the period of time during which the door handle 16 is held in said second position. After that period, if not further activated, the handle device 1 will resume the first position.

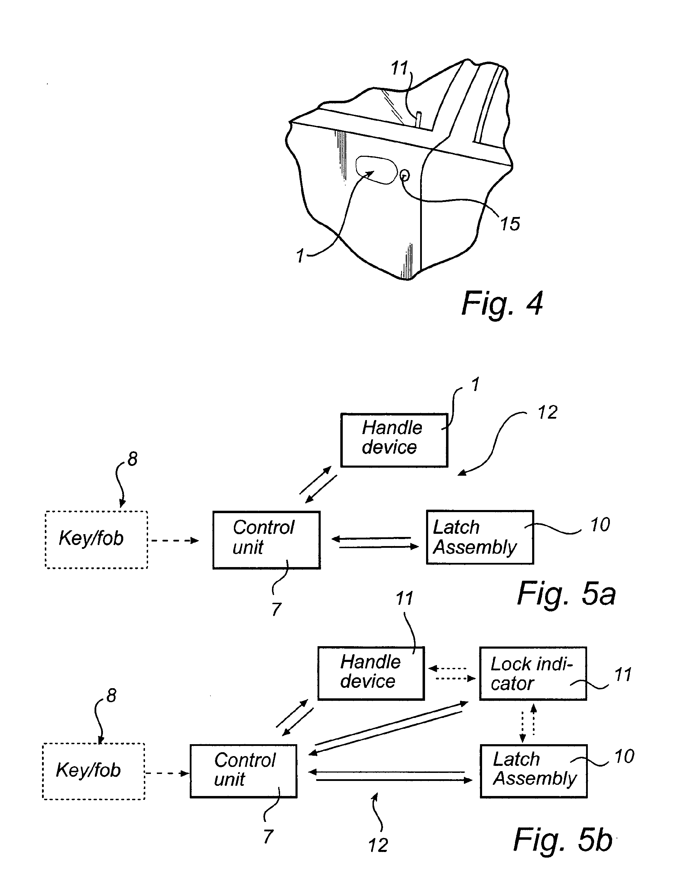

Now referring to fig. 5a, wherein a vehicle door system 12 according to a second aspect of the invention is illustrated schematically. Since the handle device 1 has the advantage of allowing for an electric system, it is understood that said actuator 2 is well equipped to be activated by a control unit 7. The control unit 7 preferably also controls a latch assembly 10 of the vehicle door system 12.

The control unit 7 is, preferably, but not necessarily provided with a receiver that will react on a signal transmitted from a key or a key fob 8. Suitably, the control unit 7, has a wireless connection with a key or a key fob 8. The locking and unlocking logic may be provided at least partly in the key or key fob 8. The control unit 7 is adapted to control whether the actuator 2 will be activated or not based on the information in the signal.

The procedure to unlock and open a closed and locked vehicle door 5 with a handle device 1 according to the second aspect of the invention, will now be described. The key or key fob 8 when activated, sends a signal to the control unit 7. The control unit 7 will then provide power from the energy source 3 to the actuator 2. The handle device 1 will perform the motion between the first and the second position. The handle device 1 will remain actuated in said second position for a given period of time. When the actuated handle device 1 is moved manually from the second to the third position the control unit 7 activates the locking and unlocking logic. The vehicle door system 12 will become unlocked, the latch assembly 10 unlatched and the vehicle door 5 may be opened. If the handle device 1 is not moved to the third position within the actuated time period, the handle device 1 will return to said first position as previously described and the vehicle door system 12 will remain locked.

Referring to fig. 5b, wherein the vehicle door system 12 according to a further preferred embodiment of the invention is presented. In addition to the first described embodiment of the second aspect of the invention, this embodiment further comprises a lock indicator 11. The control unit 7 controls the handle device 1, the lock indicator 11 and the latch assembly 10. According to the preferred embodiment the control unit 7 control these devices by sending and receiving signals. The handle device 1, the lock indicator 11 and the latch assembly 10 are able to send signals within the vehicle door system 12 in combination with the signals from the control unit 7. Although not preferred the control unit 7 can also be mechanically or partly mechanically connected to the involved devices. The vehicle door system 12 may also comprise a locking and unlocking logic. This locking and unlocking logic can also if desired, be divided and located in several different places in the vehicle door system 12. Preferably, the handle device 1 is activated remotely by a key or a key fob 8.

According to an alternative embodiment of the invention, which is disclosed in fig. 4 the vehicle door system 12 is provided with a lock indicator 11. The lock indicator 11 is a lock knob. Furthermore, the vehicle door 5 may be provided with a conventional key hole 15. Hence, it is realized that the vehicle door system 12 may be designed in a number of ways using also conventional components together with the inventive door handle device 1.

According to a further alternative embodiment of the invention the handle device 1 is only movable between a first and a second position. The second position of the handle device 1, in this case, also includes the step when the latch assembly 10 is unlatched and hence no manual operation of the door handle 16 is necessary.

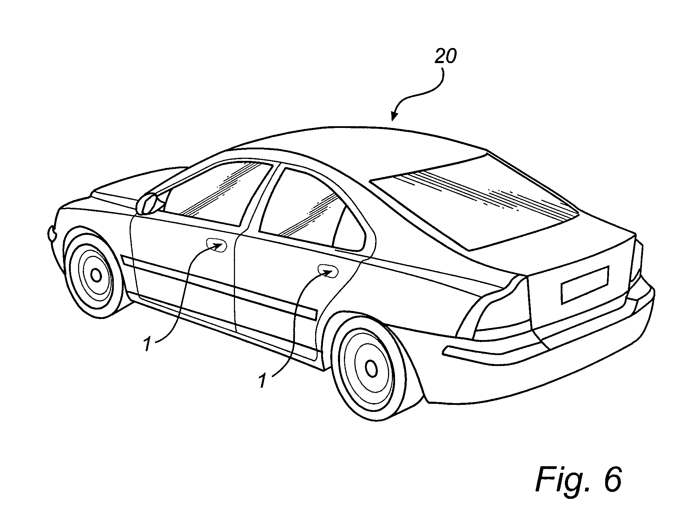

It is also an object of the present invention to provide a vehicle 20 comprising at least one handle device 1 according to the invention. Preferably, the vehicle 20 is provided with an embodiment of the inventive vehicle door system 12. Such vehicle 20 will have considerable space for safety arrangements in the sides of the vehicle 20. Other resulting benefits will be apparent from the above given description. A vehicle 20 according to the preferred embodiment of the invention is shown in Fig 6. The handle device 1 and the vehicle door system 12 of the vehicle 20 are well adapted to be used as a part of a central locking system.

The present invention should not be considered as being limited to the above-described embodiments, but rather includes all possible variations covered by the scope defined by the appended claims. It is understood by a man skilled in the art that the exact shape of the components and members of the handle device 1 can be varied in order to achieve alternative embodiments of the invention. Especially, the different states of the vehicle door system 12 during actuation can be varied due to the flexibility of the vehicle door system 12 enabled by the invention.

It is realized that handle devices according to the invention can be used in the interior of the vehicle as well. Preferably, such handles can be automatically actuated by the control unit after a ride e.g. by the removal of the start key from the key hole or similar action.

## Claims

1. A door handle device (1) which is arranged to be moved between at least a first position and a second position, **characterised in that** said handle device (1) comprises
an actuator (2), being substantially made of shape memory alloy (SMA), for effecting the movement of said handle device (1) between said at least first and second positions.

2. The handle device (1) according to claim 1, wherein said handle device (1) is a vehicle door handle device.

3. The handle device (1) according to any one of claims 1-2, wherein said actuator (2) is connectable to an energy source (3).

4. The handle device (1) according to any one of claims 1-3, wherein said handle device (1) is a flip handle device.

5. The handle device (1) according to any one of claims 2-4, wherein a surface part of said handle device (1) in said first position is aligned with a surface part (4) of a vehicle door (5).

6. The handle device (1) according to any one of claims 2-5, wherein said handle device (1) when being in said second position provides a signal to a vehicle door system (12).

7. The handle device (1) according to any one of claims 1-6, wherein said handle device (1) has a return spring unit (9) operatively connected to it.

8. The handle device (1) according to any one of claims 1-7, wherein said actuator (2) comprises at least one member of shape memory alloy (SMA).

9. The handle device (1) according to any one of claims 1-9, wherein said actuator (2) has at least one back-up member of shape memory alloy (SMA) for providing additional force under extreme conditions.

10. A door system (12) comprising a handle device (1) arranged to be moved between at least a first and a second position, **characterised in that** said handle device (1) comprises
an actuator (2), being substantially made of shape memory alloy (SMA), for effecting the movement of said handle device (1) between said at least first and second positions,.

11. The door system (12) according to claim 10, wherein said door system (12) is a vehicle door system.

12. The door system (12) according to any one of claims 10-11, wherein said actuator (2) is connectable to an energy source (3).

13. The door system (12) according to any one of claims 10-12, wherein said door system (12) comprises a latch assembly (10) and a control unit (7) for controlling said door system (12).

14. The door system (12) according to claim 13, wherein said control unit comprises a locking and unlocking logic for the door system (12).

15. The door system (12) according to any one of claims 13-14, wherein said control unit (7) is provided to be activated by a key or key fob (8).

16. The door system (12) according to claim 15, wherein said key or key fob (8) comprises at least part of the locking and unlocking logic to said vehicle door system (12).

17. The door system (12) according to any one of claims 15-16, wherein said key or key fob (8) has wireless connection to said control unit (7).

18. The door system (12) according to any one of claims 10-17, wherein said handle device (1) is arranged to be moved manually from said second position to a third position.

19. The door system (12) according to any one of claims 13-18, wherein said latch assembly (10) is set in a latched condition, and the door being in a closed position is set in a locked or lockable state by said control unit (7), when said handle device (1) is in said first position.

20. The door system (12) according to any one of claims 13-19, wherein said latch assembly (10) is set in a latched condition, and the door (5) being in a closed position is set in a locked state by said control unit (7), when said handle device (1) is in said second position.

21. The door system (12) according to any one of claims 13-20, wherein said latch assembly (10) is set in an unlatched condition, when said handle device (1) is in said second position, and said door (5), being set in an unlocked state by said control unit (7), may be opened.

22. The door system (12) according to any one of claims 13-20, wherein said latch assembly (10) is set in an unlatched condition, when said handle device (1) is moved into a third position from said second position, and said door (5), being set in an unlocked state by said control unit (7), may be opened.

23. The door system (12) according to any one of claims 10-22, wherein said handle device (1) is a flip handle device.

24. The door system (12) according to any one of claims 10-23, wherein said handle device (1) has a return spring unit (9) operatively connected to it.

25. The door system (12) according to any one of claims 10-24, wherein said actuator (2) comprises at least one member of shape memory alloy (SMA).

26. The door system (12) according to any one of claims 10-25, wherein said actuator (2) has at least one back-up member of shape memory alloy (SMA) for providing additional force under extreme conditions.

27. A vehicle (20) provided with at least one handle device (1) according to any one of claims 1-9.

28. A vehicle (20) provided with at least one door system (12) according to any one of claims 10-26.

29. The vehicle (20) according to claim 28, wherein a plurality of vehicle door systems (12) are arranged in a central lock system.
